# EUROPEAN PATENT APPLICATION

(11) **EP 4 844 219 A1**
(43) Date of publication of application: **25.11.2026**
(21) Application number: 25177748.8
(22) Date of filing: 20.05.2025
(51) Int. Cl.: F02K 1/72, F02K 1/76

(54) **AN ACTUATOR SYSTEM FOR AN AIRCRAFT THRUST REVERSER SYSTEM**

(71) Applicant: Goodrich Actuation Systems Limited, Wolverhampton, West Midlands WV10 7EH (GB)
(72) Inventor: HUBBERSTEY, Mark, Stafford (GB); PALMA, Amodio, Blackwell (GB); AVALA, Lakshmi Shirindra Venu Gopal, Wolverhampton (GB)
(74) Representative: Casalonga

(57) **Abstract**

An actuator system (100) for an aircraft thrust reverser system, the actuator system comprising a first actuator (130), a second actuator (140) and a flow divider (120), wherein the flow divider is configured to: receive an input hydraulic flow; provide a first output hydraulic flow to the first actuator; and provide a second output hydraulic flow to the second actuator, wherein the flow divider comprises a sensor (125) configured to monitor movement of the flow divider to determine a position, speed and/or acceleration of the first actuator and a position, speed and/or acceleration of the second actuator.

## Description

### Technical Field

This disclosure relates to an actuator system, an aircraft thrust reverser system and an aircraft.

### Background

Actuator systems are commonly used to move aircraft control surfaces. Some actuator systems require two or more actuators to operate in a synchronised manner to allow the system to operate effectively. This may be achieved using traditional mechanical synchronising systems and components, which often provide means for monitoring the position of the actuators.

Replacing such traditional mechanical synchronising systems with alternatives such as a flow divider may be beneficial due to reduced weight and complexity, but this may cause difficulties in monitoring actuator position.

### Summary

According to a first aspect, there is provided an actuator system for an aircraft thrust reverser system, the actuator system comprising a first actuator, a second actuator and a flow divider, wherein the flow divider is configured to: receive an input hydraulic flow; provide a first output hydraulic flow to the first actuator; and provide a second output hydraulic flow to the second actuator, wherein the flow divider comprises a sensor configured to monitor movement of the flow divider to determine a position, speed and/or acceleration of the first actuator and a position, speed and/or acceleration of the second actuator.

Determining a position of the first actuator and the second actuator by monitoring movement of the flow divider is beneficial, as it means position information of the actuators can be acquired and utilised (e.g. to generate signals as necessary when the actuators reach a predetermined level of extension/retraction) without the use of an additional and/or more complex system. Speed and/or acceleration information may also be useful to acquire without the use of an additional system.

The first output hydraulic flow provided to the first actuator may produce a first output movement, and the second output hydraulic flow provided to the second actuator may produce a second output movement.

The flow divider may be configured to provide the first and second output hydraulic flows, such that the first output movement and the second output movement are substantially the same.

The first output movement and the second output movement may be substantially the same, such that the first actuator and second actuator are substantially synchronised.

By using a flow divider to substantially synchronise the movement of a first and second actuator without the use of a complex traditional mechanical synchronising system, the actuator system may be lighter, lower cost and easier to manufacture.

The flow divider may be a rotary flow divider, the rotary flow divider comprising a common shaft, the common shaft in hydraulic communication with the first actuator and the second actuator.

The sensor may be a linear variable differential transformer, LVDT, configured to monitor a linear movement produced by the flow divider.

The sensor may be a rotary variable differential transformer, RVDT, configured to monitor a rotational movement of the flow divider.

The RVDT may be connected to the common shaft, wherein the RVDT is configured to monitor a rotational movement of the common shaft.

The sensor may be a resolver configured to monitor an angular position of the flow divider and an angular velocity of the flow divider.

The resolver may be connected to the common shaft, wherein the resolver is configured to monitor an angular position and an angular velocity of the common shaft.

The sensor may comprise a torque limiter, the torque limiter configured to allow auto-rigging of the sensor.

Auto-rigging of the first and second actuator may allow the synchronisation of the actuators to be maintained over time.

The actuator system may be a hydraulic thrust reverser actuation system.

According to a second aspect, there is provided an aircraft thrust reverser system comprising the actuator system of the first aspect, the aircraft thrust reverser system further comprising a first translating cowl and a second translating cowl.

According to a third aspect, there is provided an aircraft comprising the aircraft thrust reverser system of the second aspect.

According to a fourth aspect, there is provided a method for determining a position, speed and/or acceleration of one or more actuators, the method comprising: supplying hydraulic fluid to a flow divider, the flow divider configured to provide a first output hydraulic flow to a first actuator; and provide a second output hydraulic flow to a second actuator; monitoring a movement of the flow divider using a sensor attached to the flow divider; and determining a position, speed and/or acceleration of the first actuator and a position, speed and/or acceleration of the second actuator based upon the movement of the flow divider.

The aircraft thrust reverser system of the second aspect may comprise any of the features described with respect to the first aspect. The aircraft of the third aspect may comprise any of the features described with respect to the first and second aspects.

### Brief Description of the Drawings

Various examples will now be described, by way of example only, and with reference to the accompanying drawings, in which:
Figure 1a shows a section of a 3D assembly of a flow divider;
Figure 1b shows a schematic diagram of a flow divider;
Figure 2 shows a schematic diagram of an aircraft thrust reverser system; and
Figure 3 shows a flow diagram of a method for determining a position, speed and/or acceleration of one or more actuators.

### Detailed Description

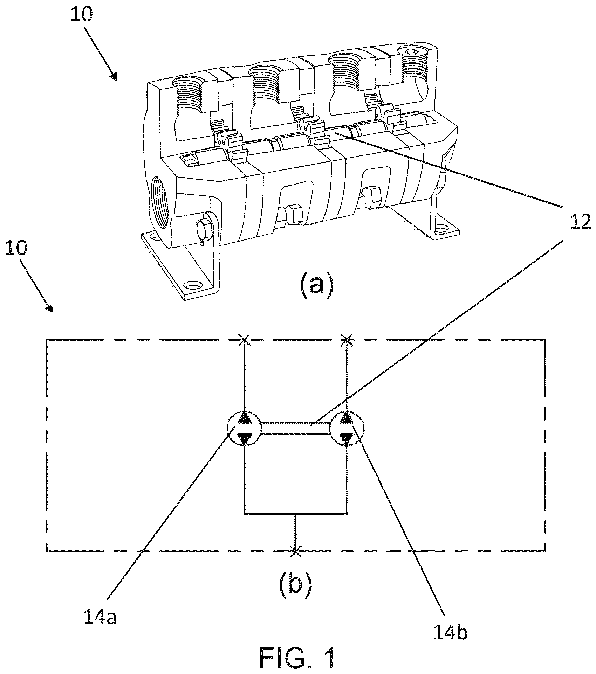

Referring to Fig. 1a and Fig. 1b, a flow divider 10 is shown. The flow divider 10 is a rotary geared flow divider 10. The flow divider 10 comprises a common shaft 12, a first hydraulic pump 14a and a second hydraulic pump 14b.

The flow divider 10 is configured to receive an initial hydraulic flow comprising hydraulic fluid from a hydraulic fluid source. The flow divider 10 is configured to divide the initial hydraulic flow between the first hydraulic pump 14a and the second hydraulic pump 14b. The first hydraulic pump 14a and the second hydraulic pump 14b are configured to provide output hydraulic flows, the output hydraulic flows comprising hydraulic fluid which has been divided by the flow divider 10. In this embodiment, the flow divider 10 is configured to divide the initial hydraulic flow substantially equally, such that the output hydraulic flows are all substantially equal. In some embodiments, the initial hydraulic flow is divided essentially equally such that, for example, a pressure or volumetric flow rate of each of the output hydraulic flows is substantially the same. The hydraulic pumps 14a 14b are connectable to motion components, for example actuators, such that the output hydraulic flows are provided to the motion components.

The common shaft 12 is connected to the first hydraulic pump 14a and the second hydraulic pump 14b, such that the common shaft 12 is in hydraulic communication with the first hydraulic pump 14a and the second hydraulic pump 14b. In this embodiment, the common shaft 12 is configured to rotate when hydraulic fluid is supplied to the flow divider 10.

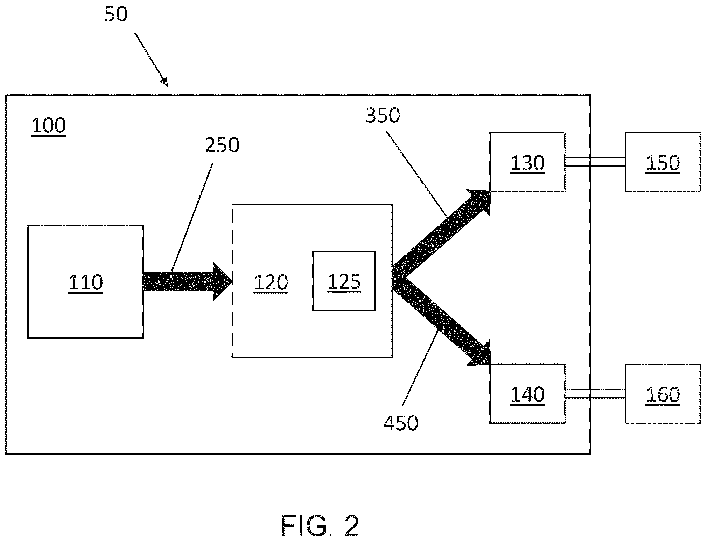

Referring to Fig. 2, an aircraft thrust reverser system 50 is shown. The aircraft thrust reverser system 50 comprises an actuator system 100, a first output component 150 and a second output component 160. The actuator system 100 comprises a hydraulic supply 110, a flow divider 120, a first actuator 130 and a second actuator 140. The flow divider 120 comprises all of the features of the flow divider 10. In this embodiment, the actuator system 100 is a hydraulic thrust reverser actuation system (HTRAS) 100. The aircraft thrust reverser system 50 is comprised in an aircraft (not shown).

The hydraulic supply 110 is configured to supply hydraulic fluid to the actuator system 100. The hydraulic supply 110 is in hydraulic communication with the flow divider 120, such that hydraulic fluid may flow between the hydraulic supply 110 and the flow divider 120. The flow divider 120 is in hydraulic communication with the first actuator 130 and the second actuator 140, such that hydraulic fluid may flow between the flow divider 120 and the first actuator 130, and between the flow divider 120 and the second actuator 140.

The flow divider 120 is configured to receive an input hydraulic flow 250. The input hydraulic flow 250 comprises hydraulic fluid provided by the hydraulic supply 110. The flow divider 120 is configured to provide a first output hydraulic flow 350 and a second output hydraulic flow 450. The first output hydraulic flow 350 and the second output hydraulic flow 450 comprise hydraulic fluid of the input hydraulic flow 250 which has been divided by the flow divider 120. The flow divider 120 is configured to provide the first output hydraulic flow 350 to the first actuator 130. The first output hydraulic flow 350 received by the first actuator 130 causes movement of the first actuator 130. The flow divider 120 is configured to provide the second output hydraulic flow 450 to the second actuator 140. The second output hydraulic flow 450 received by the second actuator 140 causes movement of the second actuator 140. The movement of the first actuator 130 caused by the first output hydraulic flow 350 is a first output movement. The movement of the second actuator 140 caused by the second output hydraulic flow 450 is a second output movement.

In the present embodiment, the first output hydraulic flow 350 and second output hydraulic flow 450 are substantially the same. The first output hydraulic flow 350 and second output hydraulic flow 450 are substantially the same such that movement of the first actuator 130 caused by the first output hydraulic flow 350 is substantially the same as movement of the second actuator 140 caused by the second output hydraulic flow 450. The first output movement and second output movement are substantially the same, such that the first actuator 130 and the second actuator 140 are substantially synchronised. The first actuator 130 and second actuator 140 being substantially synchronised comprises a speed of the first output movement being substantially the same as a speed of the second output movement. The first actuator 130 and the second actuator 140 being substantially synchronised further comprises a current position of the first actuator 130 being substantially the same as a current position of the second actuator extension side 140.

The actuator system 100 is connected to the first output component 150 and the second output component 160. The first actuator 130 is connected to the first output component 150. The first actuator 130 is mechanically coupled to the first output component 150. The first actuator 130 actuates the first output component 150. The first actuator 130 provides the first output movement to the first output component 150. The second actuator 140 is connected to the second output component 160. The second actuator 140 is mechanically coupled to the second output component 160. The second actuator 140 actuates the second output component 160. The second actuator 140 provides the second output movement to the second output component 160.

In this embodiment, the first output component 150 is a first translating cowl 150, and the second output component 160 is a second translating cowl 160. The first and second translating cowls 150 160 are configured to, for example, open and close hatches comprised in the aircraft thrust reverser system 50 which supply air to the other components i.e. air supply hatches. The first actuator 130 is connected to the first translating cowl 150 such that the first actuator 130 actuates the first translating cowl 150, and the second actuator 140 is connected to the second translating cowl 160, such that the second actuator 140 actuates the second translating cowl 160. As the first actuator 130 and the second actuator 140 are substantially synchronised, the movement of the first translating cowl 150 and the second translating cowl 160 is substantially synchronised.

In alternative embodiments, the first and second output components 150 160 may be other components of an aircraft thrust reverser system 50.

The common shaft (not shown in figure 2) of the flow divider 120 is in hydraulic communication with the first actuator 130 and the second actuator 140, as described above, via the first and second hydraulic pumps 14a 14b, which provide the first and second output hydraulic flows 350 450 respectively. The common shaft is in hydraulic communication with the first actuator 130 and the second actuator 140, such that the common shaft rotates when movement of the first actuator 130 and the second actuator 140 occurs. The common shaft is configured to drive the first and second hydraulic pumps 14a 14b, the common shaft driving the hydraulic pumps 14a 14b when rotating as hydraulic fluid passes through the flow divider 120. The common shaft rotates when the input hydraulic flow 250 is received by the flow divider 120. The common shaft rotates when the first output hydraulic flow 350 and second output hydraulic flow 450 are supplied by the flow divider 120.

The flow divider 120 comprises a sensor 125. The sensor 125 is attached to the flow divider 120 such that the sensor 125 is able to monitor a movement of the flow divider 120. The sensor 125 is configured to monitor movement of the flow divider 120 to determine a position, speed and/or acceleration of the first actuator 130 and a position, speed and/or acceleration of the second actuator 140. By determining a position of the actuators 130 140, it is possible to determine a current position of the first output component 150 and a current position of the second output component 160. In this embodiment, by determining a current position of the translating cowls 150 160, it may be possible to determine a current state of other components in the aircraft thrust reverser system 50, for example, whether an air supply hatch is in an open state or a closed state. By monitoring movement of the flow divider 120, it is possible to determine a first parameter corresponding to the first output hydraulic flow 350 and a second parameter corresponding to the second output hydraulic flow 450. The first parameter and second parameter may, for example, be a volume of the output hydraulic flows 350 450 or a flow rate of the output hydraulic flows 350 450. If parameters of the output hydraulic flows 350 450 are known, it is possible to determine a current position of the first actuator 130 and a current position of the second actuator 140. Similarly, parameters of the output hydraulic flows 350 450 can be used to determine a current speed and/or acceleration of the first actuator 130 and a current speed and/or acceleration of the second actuator 140. In the present embodiment, values of the first parameter and second parameter are substantially equal, as the first output hydraulic flow 350 and second output hydraulic flow 450 are substantially the same.

In the present embodiment, the sensor 125 is a rotary variable differential transformer (RVDT) 125 configured to monitor the rotational movement of the flow divider 120. The RVDT 125 is connected to the common shaft, wherein the RVDT 125 is configured to monitor a rotational movement of the common shaft. By monitoring a rotational movement of the common shaft, the first parameter and the second parameter can be determined.

In alternative embodiments, the sensor 125 is a linear variable differential transformer (LVDT) configured to monitor a linear movement of the flow divider 120. The LVDT is connected to the common shaft via a gearing system, such that the gearing system transforms a rotation of the common shaft to the linear movement. The LVDT monitors the linear movement produced by the gearing system. By monitoring the linear movement, the first parameter and second parameter can be determined.

In alternative embodiments, the sensor 125 is a resolver configured to monitor an angular position of the flow divider 120 and an angular velocity of the flow divider 120. The resolver is connected to the common shaft, wherein the resolver is configured to monitor an angular position of the common shaft and an angular velocity of the common shaft. By monitoring an angular position of the common shaft and/or an angular velocity of the common shaft, the first parameter and the second parameter can be determined.

In alternative embodiments, the sensor 125 is a counter, wherein the counter is configured to monitor a number of rotations completed by the common shaft. The counter may monitor a number of rotations completed by the common shaft by counting, for example, a number of times that a specific component of the common shaft passes a monitoring point.

The sensor 125 may comprise a torque limiter (not shown in the figures). The torque limiter is configured to allow auto-rigging of the sensor 125. In the present embodiment, auto-rigging of the sensor 125 comprises adjusting movement of the actuators 130 140 such that the actuators 130 140 remain substantially synchronised over time. In some embodiments, the movement of the actuators 130 140 may be adjusted such that the actuators 130 140 are translated to a full extension or full retraction position, allowing the sensor 125 to be 'reset' or rigged.

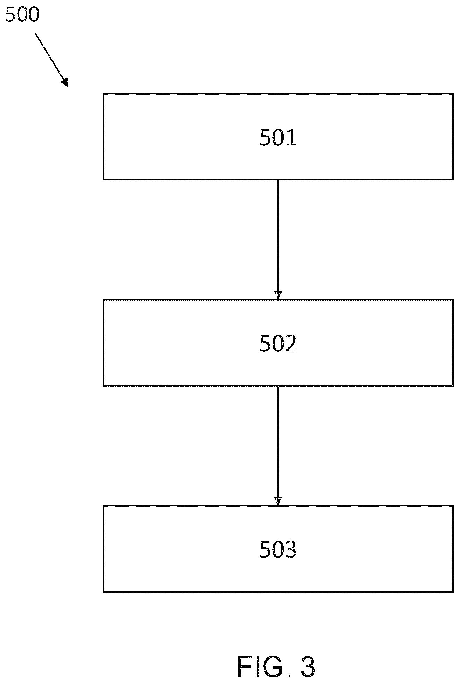

Referring to Fig. 3, a method 500 for determining a position, speed and/or acceleration of one or more actuators is shown. The method comprises a supply stage 501, a monitoring stage 502 and a determining stage 503.

The supply stage 501 comprises supplying hydraulic fluid to a flow divider. The flow divider is configured to provide a first output hydraulic flow to a first actuator; and provide a second output hydraulic flow to a second actuator.

The monitoring stage 502 comprises monitoring a movement of the flow divider using a sensor attached to the flow divider.

The determining stage 503 comprises determining a position, speed and/or acceleration of the first actuator and a position, speed and/or acceleration of the second actuator, based upon the movement of the flow divider.

Various aspects disclosed in the various examples may be used alone, in combination, or in a variety of arrangements not specifically discussed in the examples described in the foregoing and this disclosure is therefore not limited in its application to the details and arrangement of components set forth in the foregoing description or illustrated in the drawings. For example, aspects described in one example may be combined in any manner with aspects described in other examples. Although particular examples have been shown and described, it will be obvious to those skilled in the art that changes and modifications may be made without departing from the invention in its broader aspects. The scope of the following claims should not be limited by the examples set forth in the examples, but should be given the broadest reasonable interpretation consistent with the description as a whole.

## Claims

1. An actuator system for an aircraft thrust reverser system, the actuator system comprising a first actuator, a second actuator and a flow divider,
wherein the flow divider is configured to: receive an input hydraulic flow; provide a first output hydraulic flow to the first actuator; and provide a second output hydraulic flow to the second actuator,
wherein the flow divider comprises a sensor configured to monitor movement of the flow divider to determine a position, speed and/or acceleration of the first actuator and a position, speed and/or acceleration of the second actuator.

2. The actuator system of any preceding claim, wherein the first output hydraulic flow provided to the first actuator produces a first output movement, and the second output hydraulic flow provided to the second actuator produces a second output movement.

3. The actuator system of claim 2, wherein the flow divider is configured to provide the first and second output hydraulic flows such that the first output movement and the second output movement are substantially the same.

4. The actuator system of claims 2 or 3, wherein the first output movement and the second output movement are substantially the same such that the first actuator and second actuator are substantially synchronised.

5. The actuator system of any preceding claim, wherein the flow divider is a rotary flow divider, the rotary flow divider comprising a common shaft, the common shaft in hydraulic communication with the first actuator and the second actuator.

6. The actuator system of any preceding claim, wherein the sensor is a linear variable differential transformer, LVDT, configured to monitor a linear movement produced by the flow divider.

7. The actuator system of any of claims 1 to 5, wherein the sensor is a rotary variable differential transformer, RVDT, configured to monitor a rotational movement of the flow divider.

8. The actuator system of claim 7 when dependent on claim 5, wherein the RVDT is connected to the common shaft, wherein the RVDT is configured to monitor a rotational movement of the common shaft.

9. The actuator system of any of claims 1 to 5, wherein the sensor is a resolver configured to monitor an angular position of the flow divider and an angular velocity of the flow divider.

10. The actuator system of claim 9 when dependent on claim 5, wherein the resolver is connected to the common shaft, wherein the resolver is configured to monitor an angular position and an angular velocity of the common shaft.

11. The actuator system of any preceding claim, wherein the sensor comprises a torque limiter, the torque limiter configured to allow auto-rigging of the first actuator and second actuator.

12. The actuator system of any preceding claim, wherein the actuator system is a hydraulic thrust reverser actuation system.

13. An aircraft thrust reverser system comprising the actuator system of any preceding claim, the aircraft thrust reverser system further comprising a first translating cowl and a second translating cowl.

14. An aircraft comprising the aircraft thrust reverser system of claim 13.

15. A method for determining a position, speed and/or acceleration of one or more actuators, the method comprising:
supplying hydraulic fluid to a flow divider, the flow divider configured to provide a first output hydraulic flow to a first actuator; and provide a second output hydraulic flow to a second actuator;
monitoring a movement of the flow divider using a sensor attached to the flow divider; and
determining a position, speed and/or acceleration of the first actuator and a position, speed and/or acceleration of the second actuator based upon the movement of the flow divider.
